# EUROPÄISCHE PATENTSCHRIFT

(11) **EP 2 492 173 B1**
(45) Veröffentlichungstag und Bekanntmachung des Hinweises auf die Patenterteilung: **02.11.2016**
(21) Anmeldenummer: 12152438.3
(22) Anmeldetag: 25.01.2012
(51) Int. Cl.: B62D 53/00, B66F 9/075

(54) **Anhänger, Schlepper und daraus gebildeter Schlepperzug**
Trailer, tractor and tractor-trailer composed of same
Remorque, attelage et dispositif d'attelage pour tracteurs ainsi formés

(30) Priorität: 25.02.2011 DE 102011012407
(43) Veröffentlichungstag der Anmeldung: 29.08.2012
(73) Patentinhaber: STILL GmbH, 22113 Hamburg (DE)
(72) Erfinder: Claus, Alexander, 22303 Hamburg (DE)
(74) Vertreter: Geirhos, Johann

(56) Entgegenhaltungen:
- EP-A1- 1 743 828
- CH-A5- 569 605
- DE-A1- 10 131 935
- JP-A- 2000 314 655
- US-A- 3 944 258

## Beschreibung

Die Erfindung betrifft einen Anhänger eines Schlepperzuges nach dem Oberbegriff des Patentanspruchs 1. Außerdem betrifft die Erfindung Schlepper eines Schlepperzuges. wobei der Schlepper eine Anhängevorrichtung zum Ankuppeln mindestens eines Anhängers aufweist. Weiterhin betrifft die Erfindung einen aus einem Schlepper und mindestens einem angehängten Anhänger gebildeten Schlepperzug,

Der innerbetriebliche lNarentransport und Materialfluss, insbesondere die Materialversorgung von Produktionslinien in Produktionsbetrieben, erfolgt in der Regel mittels Anhängern, auf denen die zu transportierenden Waren, insbesondere mittels Transportbehälter, Paletten oder Gitterboxen, innerhalb des Produktionsbetriebes transportiert werden.

Zum Ziehen eines oder mehrerer dieser Anhänger werden als Schlepper ausgebildete Lagertechnikflurförderzeuge verwendet, die mit einer entsprechenden Anhängevorrichtung vorgesehen sind, an die ein oder mehrere Anhänger angehängt werden können. Derartige Schlepper weisen kompakte Abmessungen auf, durch die Transportanhänger innerhalb eines Produktionsbetriebes auf beengten Transportwegen sicher transportiert werden können.

In intralogistischen Prozessen nimmt der Horizontaltransport unter der Verwendung von Schlepperzügen, die aus einem Schlepper und einem oder mehreren angehängten Anhängern gebildet sind, an Bedeutung zu. Die dabei verwendeten Anhänger entsprechen häufig einfachem Ausrüstungsstand und sind in ihrer Auslegung auf Robustheit ausgerichtet. Die zulässige Beladungsmasse oder Höchstmasse der Anhänger ist häufig nur auf dem Fabrikschild des Hängers hinterlegt. Die tatsächliche Masse einer aufgenommenen Ladung entzieht sich meistens der Kenntnis der Fahrer und Bediener.

Viele an dem Schlepper angehängte Anhänger sind aufgrund der üblichen betrieblichen Anwendung verschmutzt oder so beschädigt, dass die Leergewichte nicht mehr ermittelt werden können. Gleiches gilt für Transportbehälter, die auf den Anhängern transportiert werden. Das Gewicht der zu transportierenden Ware ist ebenfalls nicht auf einfache Weise zu ermitteln, da diese Toleranzen unterliegen. Somit ist es für den Fahrer solcher Schlepper eines Schlepperzuges oft nicht möglich, die tatsächliche Anhängelast, dies zu verziehen bzw. zu transportieren gilt, zu ermitteln.

Es ist immer wieder ein Problem für Bediener die tatsächliche Anhängelast eines Schleppers in einem Schlepperzug zu bestimmen. Dadurch treten häufig Überladungen oder eine zu geringe Ausnutzung der Lastaufnahmemöglichkeiten der angehängten Anhänger auf.

Die JP 2000-314655 A offenbart einen Sattelschlepper mit einem Auflieger, bei dem zur Bestimmung des Ladungsgewichts zunächst der Auflieger unbeiaden mit dem Zugfahrzeug verbunden wird und an einer Hinterachse des Aufliegers ein Referenzsignal des Achsgewichts für den leeren Auflieger aufgenommen wird. Sodann kann mit dem Sensorsignal der Hinterachse sowie einem Lastsensor an der Sattelkupplung das Gesamtladungsgewicht des Aufliegers bestimmt werden.

Die DE 101 31 935 A1 offenbart ein verteiltes Antriebssystem in einem Zugverband aus mehreren Anhängern. Über ein Kabel werden elektrische Antriebsmotoren in den einzelnen Anhängern angetrieben und gesteuert. Dabei ist in einer Ausführungsform bekannt, dass das Gewicht des Anhängers erfasst wird.

Der vorliegenden Erfindung liegt die Aufgabe zugrunde, eine Möglichkeit bereitzustellen, auf einfache Weise das Gewicht von Anhängern eines Schlepperzuges und die Anhängelast eines Schleppers des Schlepperzuges ermitteln zu können.

Die Aufgabe wird erfindungsgemäß durch einen Anhänger nach Anspruch 1 gelöst.

Anhänger sind Transportmittel für den Transport von Gütern, die zumeist innerbetrieblich eingesetzt werden. Ein Anhänger ist vorzugsweise geeignet, mittels einer Deichsel an ein einen Schlepper oder einen vorauslaufenden Anhänger des Schlepperzuges angekuppelt zu werden.

Eine Bestimmungseinrichtung zur Bestimmung des Eigengewichts des Anhängers ist eine Einrichtung, mit der es ermöglicht wird, Informationen zum Eigengewicht des Anhängers dem Zugschlepper zur Verfügung zu stellen.

Ein Ladungsgewichtssensor ist ein Sensor, der geeignet ist, das Gewicht der von dem Anhänger aufgenommenen Ladung (Nettogewicht) zu messen bzw. zu ermitteln. Vorzugsweise ist ein Ladungsgewichtssensor ein Dehnungsmessstreifen, ein piezoresistiver Drucksensor, ein piezoelektrischer Drucksensor, ein frequenzanaloger Drucksensor, ein Drucksensor mit Hallelement, ein kapazitiver Drucksensor oder ein induktiver Drucksensor.

Das Eigengewicht des Anhängers ist vorzugsweise das Eigen- bzw. Leergewicht (Taragewicht) des Anhängers.

Eine Energiebereitstellungseinrichtung ist eine Einrichtung, die geeignet ist, Energie, vorzugsweise elektrische Energie so bereitzustellen, dass sie von einem Ladungsgewichtssensor, vorzugsweise auch von einer Speichereinheit genutzt werden kann.

Eine Übermittlungseinrichtung ist eine Einrichtung, die geeignet ist, Daten oder Informationen an einen Empfänger zu übermitteln. Der Empfänger kann in einem Schlepper oder in einem weiteren Anhänger vorgesehen sein. Vorzugsweise ist der Empfänger in einem Schlepper vorgesehen. Vorzugsweise umfasst eine Übermittlungseinrichtung einen Sender oder eine Kabelverbindung zum Schlepper.

Mit dem erfindungsgemäßen Anhänger wird ermöglicht, das Gewicht der Ladung (Nettogewicht) zu bestimmen, und dieses sowie das Leergewicht (Taragewicht) des Anhängers getrennt oder zusammen als Gesamtgewicht (Bruttogewicht) an den Schlepper zu übermitteln, so dass die Anhängelast des Schleppers und die Zuladung des Anhängers bestimmt werden kann.

Die Bestimmungseinrichtung ist gemäß einer erfindungsgemäßen Ausführungsform von einer Speichereinheit des Anhängers gebildet, in der das Eigengewicht des Anhängers speicherbar ist. Eine Speichereinheit ist eine Einheit, die geeignet ist, Daten oder Informationen zu speichern. Die Speichereinheit kann beispielsweise ein Halbleiterspeicher, ein elektronisches Speichermedium, ein Speicher, der ein magnetisierbares Material umfasst, ein optischer Speicher, ein Laserspeicher oder ein magneto-optischer Speicher sein.

Gemäß einer alternativen erfindungsgemäßen Ausführungsform weist die Übermittlungseinrichtung eine Kabelverbindung zwischen dem Anhänger und dem Schlepper auf, wobei die Bestimmungseinrichtung von der Steckerkodierung der Kabelverbindung gebildet ist, anhand der der Schlepper das Eigengewicht des Anhängers bestimmen kann. Durch eine bestimmte Steckerkodierung und somit eine Steckerbelegung der Kabelverbindung kann von dem Schlepper ein angehängter Anhänger identifiziert werden und beispielsweise aus einer Speichereinheit des Schleppers, in der Eigengewichte für verwendete Anhänger abgespeichert sind, ein zugehörendes Eigengewicht des Anhängers bestimmt werden.

In einer Ausführungsform umfasst die Energiebereitstellungseinrichtung einen Dynamo oder einen Akkumulator. Dadurch kann die Energieversorgung in dem jeweiligen Anhänger selbst vorgenommen werden. Die Energieversorgung kann damit unabhängig davon, ob der Anhänger mit anderen Anhängern oder einer externen Energieversorgung eines Schleppers gekoppelt ist, sichergestellt werden. Die Verwendung eines Akkumulators hat den Vorteil, dass auf diese Weise eine besonders robuste Energieversorgung bereitgestellt werden kann. Die Verwendung eines Dynamos hat den Vorteil, dass dadurch ein relativ wartungsarmes System zur Energieversorgung in dem Anhänger bereitgestellt werden kann.

Die Energiebereitstellungseinrichtung kann ein Elektrokabel umfassen, das eingerichtet ist, Strom von einem Schlepper des Schlepperzuges zu dem Anhänger zu leiten. Auch auf diese Weise kann ein relativ wartungsarmes System zur Energieversorgung bereitgestellt werden. Hier kann der Strom von einem Schlepper des Schlepperzuges für einen oder mehrere angehängte Anhänger, bereitgestellt werden. Dadurch kann die Energieversorgung der Anhänger auf besonders einfache Weise bereitgestellt werden.

Die gestellte Aufgabe wird auch gelöst durch einen Schlepper eines Schlepperzuges, wobei der Schlepper mit einer Anhängevorrichtung zum Ankuppeln mindestens eines Anhängers versehen ist, gelöst, wobei der Schlepper einen Empfänger, der zum Empfangen der Information der Übermittlungseinrichtung, eingerichtet ist, und eine Informationsverarbeitungseinrichtung aufweist, die eingerichtet ist, die Informationen über das Eigengewicht und/oder das Gewicht der Ladung in einem Display darzustellen.

Ein Schlepper ist ein Fahrzeug zum Ziehen von einem oder mehreren Anhängern für den Transport von Gütern.

Eine Informationsverarbeitungseinrichtung ist eine Einrichtung, die geeignet ist, Informationen zu verarbeiten. Vorzugsweise ist eine Informationsverarbeitungseinrichtung ein Prozessor. Die Informationsverarbeitungseinrichtung ist weiterhin geeignet, die von den Anhängern bereitgestellten bzw. empfangenen Informationen über das Eigengewicht und das Gewicht der Ladung bzw. das Gesamtgewicht des Anhängers zu verarbeiten. Mit einer derartigen Informationsverarbeitungseinrichtung kann dem Fahrer bzw. Bediener eines Schleppers auf einfache Weise in Verbindung mit der Bestimmung der Zuladung bzw. des Gesamtgewichtes der angehängten Anhänger das Ladungsgewicht und/oder das Gesamtgewicht und somit die Anhängelast angezeigt werden.

In dem Display kann die Informationsdarstellung bezüglich der Gewichtsinformation in einer Kilogrammangabe erfolgen. Es ist alternativ oder zusätzlich möglich, die Gewichtsangaben in einem Balkendiagramm anzuzeigen. Alternativ oder zusätzlich kann die Gewichtsinformation in einer Ampeldarstellung erfolgen, bei der bei Erreichen oder Überschreiten maximaler Werte eine Warnlampe betätigt wird.

Vorzugsweise weist der Schlepper eine Bruttogewichtsanzeige auf, die zur Anzeige eines Bruttogewichts des Anhängers und somit der Anhängelast eingerichtet ist. Der Fahrer kann so auf Grundlage der Information über das aktuelle Bruttogewicht über das weitere Beladen bzw. notwendige Entladen entscheiden. Eine optimale Auslastung des Schlepperzuges ist damit einfacher realisierbar.

Das Bruttogewicht ist vorzugsweise das Eigen- bzw. Leergewicht aller an einen Schlepper gekuppelten Anhänger zuzüglich des Gewichts der aufgenommenen Ladung.

Aufgrund der Kenntnis der Anhängelast kann der Fahrer die zulässige Höchstgeschwindigkeit bestimmen, und damit die Sicherheit beim Verfahren des Zuges einfacher realisieren.

In einer vorteilhaften Ausführungsform weist der Schlepper eine Taragewichtsanzeige auf, die zur Anzeige eines Taragewichts und somit des Leergewichts der Anhänger eingerichtet ist. Dadurch wird für einen Bediener das Beladen der Anhänger erleichtert, da er vor dem Beladen bei Kenntnis der maximalen Anhängelast des Schleppers auf einfache Weise bestimmen kann, wie groß die Last der Ladung maximal sein darf.

Das Taragewicht ist vorzugsweise das Eigen- bzw. Leergewicht aller an einen Schlepper gekuppelten Anhänger. Das Taragewicht kann ein Festtaragewicht - ein festgelegtes Leergewicht - sein.

In einer vorteilhaften Ausführungsform weist dass der Schlepper eine Nettogewichtsanzeige auf, die zur Anzeige eines Nettogewichts der aufgenommen Ladung eines Anhängers eingerichtet ist.

Das Nettogewicht ist vorzugsweise das Gewicht der Ladung, die sich auf den an einen Schlepper gekuppelten Anhängern befindet. Eine Überladung der Anhänger kann somit auf einfache Weise vermieden werden.

Gemäß einer Weiterbildung der Erfindung weist der Schlepper eine Steuerungseinrichtung auf, die eingerichtet ist, mit den Informationen über das Eigengewicht und das Gewicht der Ladung der Anhänger bzw. das Gesamtgewicht der Anhänger eine zulässige Höchstgeschwindigkeit zu bestimmen.

In der Informationsverarbeitungseinrichtung bzw. in der Steuerungseinrichtung können Informationen zu einer zulässigen Maximalgeschwindigkeit abhängig von einem Höhenprofil, beispielsweise einem Rampenwinkel beim Befahren einer Steigung oder eines Gefälles, und/oder von der Anhängelast des Schleppers hinterlegt sein.

Eine Steuerungseinrichtung ist eine Einrichtung, die geeignet ist, einen bestimmten Wert, vorzugsweise eine zulässige Höchstgeschwindigkeit, in Abhängigkeit der ermittelten Anhängelast vorzugeben. Dabei kann die Steuerungseinrichtung eine Einrichtung sein, die den Wert an einen Fahrer oder Bediener weitergibt, oder eine Einrichtung, die den Wert direkt im Schlepper ohne Zutun des Fahrers oder Bedieners vorgibt.

Besondere Vorteile lassen sich erzielen, wenn die Steuerungseinrichtung ein Display umfasst, das eingerichtet ist, die zulässige Höchstgeschwindigkeit anzuzeigen. Die Höchstgeschwindigkeit des Schleppers kann in Abhängigkeit zu der Information Anhängelast dargestellt werden. Dadurch wird dem Fahrer die Information über die optimale Geschwindigkeit zugänglich gemacht. Dadurch kann der Fahrer die Sicherheit gewährleisten, ohne unangemessen langsam fahren zu müssen. Mit der in Abhängigkeit von der Anhängelast ermittelten zulässigen Maximalgeschwindigkeit kann somit ein sicheres Abbremsen des Schlepperzuges und eine hohe Transportleistung erzielt werden.

In einer Ausführungsform umfasst die Steuerungseinrichtung eine mit dem Fahrantrieb des Schleppers in Wirkverbindung stehende Automatik, die eingerichtet ist, die erreichbare Fahrgeschwindigkeit des Schleppers auf die zulässige Höchstgeschwindigkeit zu begrenzen. Dadurch kann sichergestellt werden, dass die zulässige Höchstgeschwindigkeit auch dann nicht überschritten wird, wenn der Fahrer auf entsprechende Hinweise nicht reagiert. Die Höchstgeschwindigkeit des Zugfahrzeuges kann in Abhängigkeit zu der Information Anhängelast somit auf einfache Weise geregelt bzw. begrenzt werden. Hierbei können weitere Betriebsparameter, beispielsweise das Befahren einer Steigung bzw. eines Gefälles berücksichtigt werden.

Vorzugsweise ist eine Informationsverarbeitungseinrichtung vorgesehen, die eingerichtet ist, ein Differenzgewicht zwischen zwei von dem Empfänger zu verschiedenen Zeitpunkten empfangenen Gewichten der Ladung des Anhängers zu bestimmen und die Gewichtsanzeige ist eingerichtet, ein Differenzgewicht zwischen zwei von dem Empfänger zu verschiedenen Zeitpunkten empfangenen Gewichten der Ladung des Anhängers anzuzeigen. Dadurch kann auf einfache Weise das Gewicht verschiedener Teilladungen bestimmt werden.

Besondere Vorteile ergeben sich, wenn der Schlepper mit einer Druckereinrichtung zur Ausgabe der Gewichtsinformationen versehen ist. Mit einem mit der Informationsverarbeitungseinrichtung in Verbindung stehenden Drucker können von einer Bedienperson auf einfache Weise beispielsweise das Gewicht einer aufgenommenen Ladung oder das Gewicht einer abgeladenen Ladung oder die Teilladungen bzw. die Anhängelast auf einfache Weise ausgedruckt werden.

Die Aufgabe wird auch gelöst durch einen Schlepperzug aufweisend mindestens einen erfindungsgemäßen Anhänger und einen erfindungsgemäßen Schlepper.

Um bei einem aus mehreren Anhängern und einem Schlepper bestehenden Schlepperzug die Lastinformation der Anhänger an den Schlepper weiterleiten zu können, kann gemäß einer Weiterbildung der Erfindung jeder Anhänger mit einer Durchführung, beispielsweise einer Kabelverbindung, für die Übermittlung der Informationen über das Eigengewicht und/oder das Gewicht der Ladung eines weiteren Anhängers an den Empfänger des Schleppers versehen werden, so dass bei mehreren Anhängern im Verbund, die Lastinformationen durch die Anhänger durchgeführt werden können.

Gemäß einer alternativen Weiterbildung der Erfindung weist bei einem aus mehreren Anhängern und einem Schlepper bestehenden Schlepperzug ein erster Anhänger einen Zwischenempfänger zum Empfangen der Information der Übermittlungseinrichtung eines weiteren, an den ersten Anhänger angehängten Anhängers und eine Informationsverarbeitungseinrichtung zur Addition der empfangenen Informationen über das Taragewicht und das Nettogewicht der Ladung des weiteren Anhängers mit den Informationen zum Taragewicht des ersten Anhängers in der Speichereinheit und des vom Ladungsgewichtssensor ermittelten Nettogewichts der Ladung des ersten Anhängers auf, wobei die Informationsverarbeitungseinrichtung eingerichtet ist, die Addition des Taragewichts und Nettogewichts der Ladung des zweiten Anhängers mit den Informationen zum Taragewicht des ersten Anhängers und des vom Ladungsgewichtssensor ermittelten Nettogewichts der Ladung des ersten Anhängers an die Übermittlungseinrichtung des ersten Anhängers zur Übermittlung an den Schlepper weiterzugeben. Dadurch kann auf einfache Weise sichergestellt werden, dass in dem Schlepper die Informationen über die Taragewichte der angekoppelten Anhänger und die Nettogewichte der Ladung der angekoppelten Anhänger vorhanden sind. Auf diese Weise kann die Lastinformation, das heißt, die Information über das Taragewicht des angekoppelten weiteren Anhängers und das Nettogewicht der Ladung des weiteren Anhängers durch den ersten Anhänger durchgeführt werden. Bei mehr als zwei angehängten Anhängern kann die Lastinformation entsprechend durch mehrere Anhänger durchgeführt werden.

Weitere Vorteile und Einzelheiten der Erfindung werden anhand der in den schematischen Figuren dargestellten Ausführungsbeispiele näher erläutert. Hierbei zeigt
- Figur 1: eine Seitenansicht eines erfindungsgemäßen Schleppers und
- Figur 2: einen erfindungsgemäßen Schlepperzug.

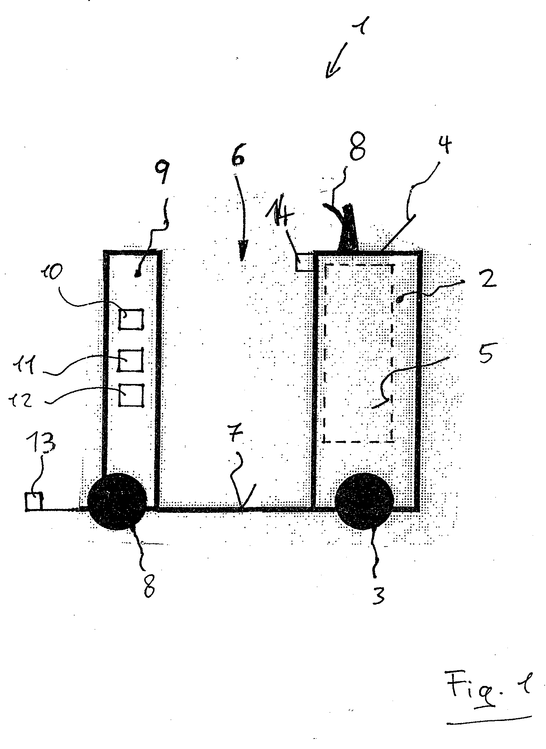

Figur 1 zeigt eine Seitenansicht eines erfindungsgemäßen Schleppers 1. Der Schlepper 1 weist in Fahrzeuglängsrichtung gesehen einen frontseitigen Antriebsteil 2 auf, in dem zumindest ein lenkbares Antriebsrad 3 angeordnet ist.

Der Schlepper 1 weist beispielsweise ein elektrisches Antriebssystem mit einem elektrischen Fahrantrieb auf. Der Fahrantrieb umfasst einen in dem Antriebsteil 2 angeordneten und nicht mehr dargestellten, mit dem Antriebsrad 3 in Wirkverbindung stehenden elektrischen Fahrantriebsmotor. Als Lenkantrieb kann ein elektrischer Lenkmotor vorgesehen sein. In dem Antriebsteil 2 ist ein Batteriefach 5 angeordnet, in dem eine Energieversorgungseinrichtung des elektrischen Antriebssystems angeordnet werden kann, beispielsweise ein Batterieblock. Es ist alternativ möglich, den Schlepper 1 mit einer Brennstoffzelle als elektrische Energieversorgungseinheit zu versehen. Zudem kann der Schlepper 1 ein verbrennungsmotorisches Antriebssystem mit einem Verbrennungsmotor aufweisen.

Der Schlepper 2 ist mit einem Display 4 versehen. Zudem kann der Schlepper 1 mit einer Druckereinrichtung 14 versehen sein.

Anschließend an das Antriebsteil 2 und das Batteriefach 5 weist der Schlepper 1 einen Fahrerplatz 6 auf, der von einer Standplattform 7 gebildet ist. Zur Bedienung des Schleppers 1 ist eine lenkerähnliche Bedienungsanordnung 8 vorgesehen, die an der Oberseite des Antriebsteils 2 angeordnet ist.

Heckseitig grenzt ein Rahmenabschnitt 9 den Fahrerplatz 6 ab. Dieser heckseitige Rahmenabschnitt 9 ist mit Lasträdern 8 versehen.

Alternativ zu dem dargestellten Schlepper 1 können die heckseitigen Lasträder 8 als Antriebsräder und ein oder zwei frontseitige, nicht-angetriebene gelenkte Räder 3 vorgesehen sein.

Der erfindungsgemäße Schlepper 1 ist mit einem Empfänger 10, einer Steuerungseinrichtung 11 und einer Informationsverarbeitungseinrichtung 12 versehen.

Außerdem weist der Schlepper 1 eine als Anhängerkupplung ausgebildete Anhängevorrichtung 13 auf, mit der der Schlepper 1 mit einem oder mehreren nicht dargestellten Anhängern verbunden werden kann.

Der Empfänger 10 ist eingerichtet, Daten zu empfangen, die Informationen über das Leergewicht und das Gewicht der Ladung und/oder das Gesamtgewicht eines oder mehrerer in Figur 1 nicht gezeigten Anhängers enthalten. Diese Daten werden in die Informationsverarbeitungseinrichtung 12 eingelesen, die aufgrund dieser Daten das Bruttogewicht und somit die Anhängelast und/oder das Taragewichts und somit das Leergewicht der angehängten Anhänger und/oder das Nettogewicht der von den Anhängern aufgenommenen Ladung an dem Display 4 anzeigen kann.

Weiterhin kann die Informationsverarbeitungseinrichtung 12 in Verbindung mit der Steuerungseinrichtung 11 aus dem Gesamtgewicht der Anhänger und somit der Anhängelast eine zulässige Höchstgeschwindigkeit des Schleppers 1 berechnen. Die zulässige Höchstgeschwindigkeit wird mittels der Steuerungseinrichtung 11 an dem Display 4 angezeigt. Bei einer Überschreitung der Höchstgeschwindigkeit kann an dem Display 4 ein Warnsignal, beispielsweise ein visuelles oder akustisches Warnsignal ausgegeben werden.

Zusätzlich oder alternativ kann die Steuerungseinrichtung 11 mit dem Fahrantrieb des Schleppers 1 in Verbindung stehen, um in Abhängigkeit von der ermittelten Anhängelast die Höchstgeschwindigkeit des Schleppers 1 zu begrenzen bzw. zu regeln.

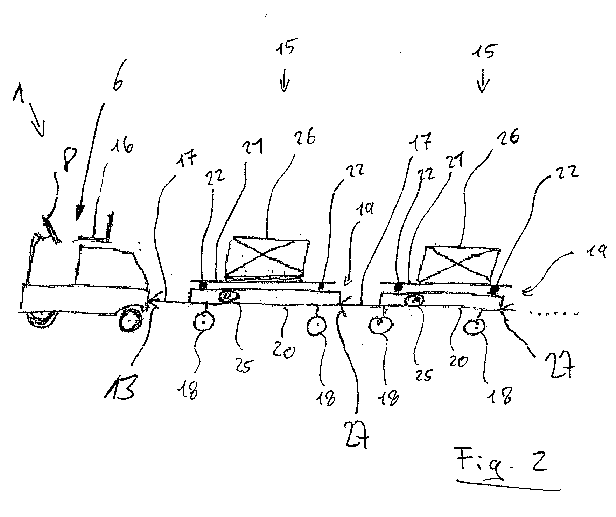

Figur 2 zeigt einen erfindungsgemäßen Schlepperzug, der einen erfindungsgemäßen Schlepper 1 und zwei angehängte Anhänger 15 auf. Als Schlepper 1 könnte der in Figur 1 gezeigte Schlepper eingesetzt werden, bei dem in Figur 2 gezeigten Schlepperzug wird jedoch ein ähnlicher Schlepper 1 eingesetzt, bei dem der Fahrerplatz 6 von einem Fahrersitz 16 gebildet ist. Der Schlepper 1 weist eine Anhängevorrichtung 13 auf, die mit einer Deichsel 17 des ersten Anhängers 15 gekoppelt ist. Der erste Anhänger 15 weist Lastrollen 18 und eine Ladefläche 19 auf.

Die Ladefläche 19 weist einen feststehenden unteren Teil 20 und einen beweglichen oberen Teil 21 auf. Zwischen dem feststehenden unteren Teil 20 und dem beweglichen oberen Teil 21 sind Ladungsgewichtssensoren 22 angeordnet. Die Ladungsgewichtssensoren 22 sind als Lastsensoren ausgebildet und beispielsweise von Dehnungsmessstreifen oder Drucksensoren gebildet. Sofern der Anhänger 15 mit einer Hubeinrichtung versehen ist, um die aufgenommen Ladung, beispielsweise einen Transportbehälter, anzuheben, können die Drucksensoren der Hubeinrichtung des Anhängers 15 zugeordnet sein. In dem feststehenden unteren Teil 20 ist eine Zentralbaugruppe 25 angeordnet, die eine Speichereinheit, einen Übermittlungseinrichtung, beispielsweise einen Sender, und einen Akkumulator bzw. einen Dynamo als Energiebereitstellungseinrichtung umfasst. Die Zentralbaugruppe steht mit den Ladungsgewichtssensoren 22 in Wirkverbindung und kann und gegebenenfalls mit einem Zwischenempfänger versehen sein. Auf dem beweglichen oberen Teil 21 steht ein Transportbehälter 26. Die Speichereinheit des Anhängers 15, in der das Leergewicht des Anhängers 15 abgelegt ist, bildet eine Bestimmungseinrichtung zur Bestimmung des Eigengewichts des Anhängers 15.

An eine hintere Anhängerkupplung 27 des ersten Anhängers 15 ist ein baugleicher weiterer, hinterer Anhänger 15 mit seiner Deichsel 17 angekoppelt. Auch auf diesem Anhänger steht ein Transportbehälter 26.

Die Ladungsgewichtssensoren 22 des jeweiligen Anhängers 15 sind eingerichtet, das Gewicht, das auf ihnen lastet zu messen. In der Zentralbaugruppe 25 kann aus dem Messwert das Gewicht der aufgenommenen Ladung bestimmt werden. In der Speichereinheit jedes Anhängers 15 ist das Leergewicht des Anhängers 15 abgelegt. Mittels der Übermittlungseinrichtung der Zentralbaugruppe 25 kann das Leergewicht des Anhängers 15 (Taragewicht), das Gewicht der aufgenommenen Ladung (Nettogewicht) und das Gesamtgewichts des beladenen Anhängers 15 (Bruttogewicht) an den Empfänger 10 des Schleppers 1 weitergeleitet werden.

Bei dem erfindungsgemäßen Schlepperzug kann an den Anhängern 15 das Ladungsgewicht der aufgenommen Ladung bestimmt werden. Die Übermittlungseinrichtung der Anhänger 15 ist eingerichtet, das Eigengewicht des Anhängers 15 und das von den Lastsensoren 22 gemessene Gewicht der Ladung getrennt oder zusammen als Gesamtgewicht an den Empfänger 10 des Schleppers 1 zu senden. Der gegebenenfalls vorhanden Zwischenempfänger eines Anhängers 15 ist eingerichtet, die von der Übermittlungseinrichtung eines an den Anhänger 15 angehängten weiteren Anhängers 15 gesendeten Gewichtsinformationen, beispielsweise das Gesamtgewicht, zu empfangen. Wenn der Zwischenempfänger das Gesamtgewicht eines weiteren angehängten Anhängers 15 empfängt, wird auch dieses Gesamtgewicht in der Speichereinheit gespeichert und zusammen mit dem Gesamtgewicht des ersten Anhängers 15 an den Empfänger 10 des Schleppers 1 gesendet.

Wenn der Schlepperzug mehr als zwei Anhänger 15 aufweist, wird jeweils das Gesamtgewicht eines Anhängers 15 an den sich jeweils davor befindlichen Anhänger 15 weitergegeben. Das Gesamtgewicht aller Anhänger 15 wird von dem ersten Anhänger 15 an den Schlepper 1 gegeben.

Der Schlepper 1 des beschriebenen Schlepperzugs hat daher die Information, wie hoch das Gesamtgewicht der angehängten Anhänger 15 mitsamt der sich darauf befindlichen Lasten und somit die Anhängelast ist. Dadurch kann die zulässige Höchstgeschwindigkeit des Schlepperzugs beispielsweise durch Anzeige in dem Display 4 des Schleppers 1 oder durch eine automatische Regelung bzw. Begrenzung des Fahrantriebs gesteuert werden. Beim Betrieb des Schlepperzuges wird somit eine hohe Betriebssicherheit ermöglicht, wobei weiterhin ein sicheres Abbremsen erzielbar ist.

Alternativ kann zur Übermittlung der Gewichtsinformationen eine Kabelverbindung vom Anhänger 15 zum Schlepper 1 als Übermittlungseinrichtung vorgesehen werden. Anhand der Steckercodierung dieser Kabelverbindung kann eine Bestimmungsvorrichtung zur Bestimmung des Eigengewichts des Anhängers gebildet werden. Über die Steckercodierung der Kabelverbindung wird es ermöglicht, dass der Schlepper 1 einen angehängten Anhänger 15 identifizieren kann. Der Schlepper 1 weist hierbei eine Speichereinheit auf, in die Leergewichte entsprechender Anhänger bzw. Anhängertypen abgespeichert sind, so dass dem Schlepper 1 das Leergewicht des angehängten Anhängers 15 zur Verfügung steht.

Mit der Erfindung kann der Fahrer des Schleppers 1 über das weitere Beladen bzw. ein erforderliches Entladen entscheiden. Dem Fahrer wird somit eine optimale Auslastung des Schlepperzuges ermöglicht.

## Patentansprüche

1. Anhänger (15) eines Schlepperzuges, wobei der Anhänger (15) mit einer Ladefläche (19), Rädern (18) und einer Zugdeichsel (17) zum Ankuppeln an einen Schlepper (1) versehen ist, wobei der Anhänger (15) eine Bestimmungssinrichtung zur Bestimmung des Eigengewichts des Anhängers, einen Ladungsgewichtssensor (22), der eingerichtet ist, das Gewicht der Ladung des Anhänger (15) zu bestimmen, eine Energiebereitstellungseinrichtung, die eingerichtet ist, den Ladungsgewichtssensor (22) mit Energie zu versorgen, und eine Übermittlungseinrichtung, die eingerichtet ist, die Information über das Eigengewicht und das Gewicht der Ladung des Anhänger (15) an einen Empfänger (10) zu übermitteln, aufweist,
**dadurch gekennzeichnet,**
**dass** die Übermittlungseinrichtung einen Sender aufweist, wobei die Bestimmungseinrichtung von einer Speichereinheit des Anhängers (15) gebildet ist, in der das Eigengewicht des Anhänger (15) speicherbar ist, oder
**dass** die Übermittlungseinrichtung eine Kabelverbindung zwischen dem Anhänger (15) und dem Schlepper (1) aufweist, wobei die Bestimmungseinrichtung von der Steckerkodierung der Kabelverbindung gebildet ist, anhand der der Schlepper (1) das Eigengewichts des Anhängers (15) bestimmen kann.

2. Anhänger nach Anspruch 1, **dadurch gekennzeichnet, dass** die Energiebereitstellungseinrichtung einen Dynamo oder einen Akkumulator umfasst.

3. Anhänger nach Anspruch 1 oder 2, **dadurch gekennzeichnet, dass** die Energiebereitsteilungseinrichtung ein Elektrokabel umfasst, das eingerichtet ist, Strom von einem Schlepper (1) zu dem Anhänger (15) zu leiten.

4. Schlepper (1) eines Schlepperzuges, wobei der Schlepper (1) mit einer Anhängevorrichtung (13) zum Ankuppeln mindestens eines Anhängers (15)nach einem der Ansprüche 1 bis 3, versehen ist,
**dadurch gekennzeichnet,**
**dass** der Schlepper einen Empfänger (10), der zum Empfangen der Information der Übermittlungseinrichtung eingerichtet ist, und eine Informationsverarbeitungseinrichtung (12) aufweist, die eingerichtet ist, die Informationen über das Eigengewicht und/oder das Gewicht der Ladung in einem Display (4) darzustellen.

5. Schlepper nach Anspruch 4, **dadurch gekennzeichnet, dass** der Schlepper (1) eine Bruttogewichtsanzeige aufweist, die zur Anzeige eines Bruttogewichts eingerichtet ist.

6. Schlepper nach Anspruch 4 oder 5, **dadurch gekennzeichnet, dass** der Schlepper (1) eine Taragewichtsanzeige aufweist, die zur Anzeige eines Taragewichts eingerichtet ist.

7. Schlepper nach einem der Ansprüche 4 bis 6, **dadurch gekennzeichnet, dass** der Schlepper (1) eine Nettogewichtsanzeige aufweist, die zur Anzeige eines Nettogewichts eingerichtet ist.

8. Schlepper nach einem der Ansprüche 4 bis 7, **dadurch gekennzeichnet, dass** der Schlepper (1) eine Steuerungseinrichtung (11) aufweist, die eingerichtet ist, die zulässige Höchstgeschwindigkeit in Abhängigkeit der übermittelten Informationen zu bestimmen.

9. Schlepper nach einem der Ansprüche 4 bis 7, **dadurch gekennzeichnet, dass** die Steuerungseinrichtung (11) ein Display (4) umfasst, das eingerichtet ist, die zulässige Höchstgeschwindigkeit anzuzeigen.

10. Schlepper nach einem der Ansprüche 4 bis 9, **dadurch gekennzeichnet, dass** die Steuerungseinrichtung (11) eine Automatik umfasst, die eingerichtet ist, die erreichbare Fahrgeschwindigkeit des Schleppers auf die zulässige Höchstgeschwindigkeit zu begrenzen.

11. Schlepper nach einem der Ansprüche 4 bis 10, **dadurch gekennzeichnet, dass** die Informationsverarbeitungseinrichtung (12) eingerichtet ist, ein Differenzgewicht zwischen zwei von dem Empfänger zu verschiedenen Zeitpunkten empfangenen Gewichten der Ladung des Anhängers (15) zu bestimmen und die Gewichtsanzeige eingerichtet ist, ein Differenzgewicht zwischen zwei von dem Empfänger zu verschiedenen Zeitpunkten empfangenen Gewichten der Ladung des Anhängers (15) anzuzeigen.

12. Schlepper nach einem der Ansprüche 4 bis 11, **dadurch gekennzeichnet, dass** der Schlepper mit einer Druckereinrichtung (14) zur Ausgabe der Gewichtsinformationen versehen ist, der mit der Informationsverarbeitungseinrichtung (12) verbunden ist.

13. Schlepperzug aufweisend mindestens einen Anhänger (15) nach einem der Ansprüche 1 bis 3 und einem Schlepper (1) nach einem der Ansprüche 4 bis 12.

14. Schlepperzug nach Anspruch 13, **dadurch gekennzeichnet, dass** die Anhänger (15) eine Durchführung der Information über das Eigengewicht und/oder das Gewicht der Ladung eines weiteren Anhängers (15) an den Empfänger (10) des Schleppers aufweisen.

15. Schlepperzug nach Anspruch 14, **dadurch gekennzeichnet, dass** ein erster Anhänger (15) einen Zwischenempfängerzum Empfangen der Information der Übermittlungseinrichtung eines weiteren, an den ersten Anhänger (15) angehängten Anhängers (15) und eine Informationsverarbeitungseinrichtung zur Addition der empfangenen Informationen über das Taragewicht und das Nettogewicht der Ladung des weiteren Anhängers (15) mit den Informationen zum Taragewicht des ersten Anhängers (15) in der Speichereinheit und des vom Ladungsgewichtssensor (22) ermittelten Nettogewichts der Ladung des ersten Anhängers (15), aufweist und wobei die Informationsverarbeitungseinrichtung eingerichtet ist, die Addition des Taragewichts und Nettogewichts der Ladung des weiteren Anhängers (15) mit den Informationen zum Taragewicht des ersten Anhängers (15) und des vom Ladungsgewichtssensor (22) ermittelten Nettogewichts der Ladung des ersten Anhängers (15) an die Übermittlungseinrichtung des ersten Anhängers zur Übermittlung an den Schlepper (1) weiterzugeben.

## Claims

1. Trailer (15) of a tractor-trailer combination, wherein the trailer (15) is provided with a load area (19), wheels (18) and a drawbar (17) for coupling to a tractor (1), wherein the trailer (15) has a determining device for determining the unladen weight of the trailer, a cargo weight sensor (22) which is configured to determine the weight of the cargo of the trailer (15), an energy supply device which is configured to supply the cargo weight sensor (22) with energy, and a transmission device which is configured to transmit the information about the unladen weight and the weight of the cargo of the trailer (15) to a receiver (10), **characterized**
**in that** the transmission device has a transmitter, wherein the determining device is formed by a memory unit of the trailer (15), in which memory unit the unladen weight of the trailer (15) can be stored, or in that the transmission device has a cable connection between the trailer (15) and the tractor (1), wherein the determining device is formed by the plug coding of the cable connection on the basis of which the tractor (1) can determine the unladen weight of the trailer (15).

2. Trailer according to Claim 1, **characterized in that** the energy supply device comprises a dynamo or an accumulator.

3. Trailer according to Claim 1 or 2, **characterized in that** the energy supply device comprises an electric cable which is configured to conduct current from a tractor (1) to the trailer (15).

4. Tractor (1) of a tractor-trailer combination, wherein the tractor (1) is provided with a hitch device (13) for coupling at least one trailer (15) according to one of Claims 1 to 3,
**characterized**
**in that** the tractor has a receiver (10) which is configured to receive the information of the transmission device, and an information processing device (12) which is configured to display the information about the unladen weight and/or the weight of the cargo in a display (4).

5. Tractor according to Claim 4, **characterized in that** the tractor (1) has a gross weight display which is configured to display a gross weight.

6. Tractor according to Claim 4 or 5, **characterized in that** the tractor (1) has tare weight display which is configured to display a tare weight.

7. Tractor according to one of Claims 4 to 6, **characterized in that** the tractor (1) has a net weight display configured to display a net weight.

8. Tractor according to one of Claims 4 to 7, **characterized in that** the tractor (1) has a control device (11) which is configured to determine the permissible maximum speed as a function of the transmitted information.

9. Tractor according to one of Claims 4 to 7, **characterized in that** the control device (11) comprises a display (4) which is configured to display permissible maximum speed.

10. Tractor according to one of Claims 4 to 9, **characterized in that** the control device (11) comprises an automatic system which is configured to limit the attainable velocity of the tractor to the permissible maximum speed.

11. Tractor according to one of Claims 4 to 10, **characterized in that** the information processing device (12) is configured to determine a differential weight between two weights of the cargo of the trailer (15) which are received by the receiver at different times, and the weight display is configured to display a differential weight between two weights of the cargo of the trailer (15) which are received by the receiver at different times.

12. Tractor according to one of Claims 4 to 11, **characterized in that** the tractor is provided with a printer device (14) for outputting the weight information, which tractor (14) is connected to the information processing device (12).

13. Tractor-trailer combination having at least one trailer (15) according to one of Claims 1 to 3 and a tractor (1) according to one of Claims 4 to 12.

14. Tractor-trailer combination according to Claim 13, **characterized in that** the trailers (15) have a means of carrying out information relating to the unladen weight and/or the weight of the cargo of a further receiver (15) to the receiver (10) of the tractor.

15. Tractor-trailer combination according to Claim 14, **characterized in that** a first trailer (15) has an intermediate receiver for receiving information from the transmission device of a further trailer (15) which is hitched to the first trailer (15), and an information processing device for adding the received information relating to the tare weight and the net weight of the cargo of the further trailer (15) to the information relating to the tare weight of the first trailer (15) in the memory unit and the net weight of the cargo of the first trailer (15), determined by the cargo weight sensor (22), and wherein the information processing device is configured to pass on the addition of the tare weight and net weight of the cargo of the further trailer (15) with the information relating to the tare weight of the first trailer (15) and the net weight of the cargo of the first trailer (15), determined by the cargo weight sensor (22), to the transmission device of the first trailer for transmission to the tractor (1).

## Revendications

1. Remorque (15) d'un attelage pour tracteurs, dans laquelle la remorque (15) est munie d'un plateau de chargement (19), de roues (18) et d'un timon (17) pour l'attelage à un tracteur (1), dans laquelle la remorque (15) présente un dispositif de détermination pour la détermination de la tare de la remorque, un détecteur du poids de chargement (22), qui est conçu pour déterminer le poids du chargement de la remorque (15), un dispositif de fourniture d'énergie, qui est conçu pour alimenter en énergie le détecteur du poids de chargement (22), et un dispositif de transmission, qui est conçu pour transmettre à un récepteur (10) l'information concernant la tare et le poids du chargement de la remorque (15),
**caractérisée en ce que** le dispositif de transmission présente un émetteur, dans laquelle le dispositif de détermination est formé par une unité de mémoire de la remorque (15), dans laquelle la tare de la remorque (15) peut être mémorisée, ou **en ce que** le dispositif de transmission présente une liaison par câble entre la remorque (15) et le tracteur (1), dans laquelle le dispositif de détermination est formé par le codage des connecteurs de la liaison par câble, à l'aide duquel le tracteur (1) peut déterminer la tare de la remorque (15).

2. Remorque selon la revendication 1, **caractérisée en ce que** le dispositif de fourniture d'énergie comprend une dynamo ou un accumulateur.

3. Remorque selon la revendication 1 ou 2, **caractérisée en ce que** le dispositif de fourniture d'énergie comprend un câble électrique, qui est conçu pour transporter du courant d'un tracteur (1) à la remorque (15).

4. Tracteur (1) d'un attelage pour tracteurs, dans lequel le tracteur (1) est pourvu d'un dispositif d'attelage (13) pour l'attelage d'au moins une remorque (15) selon l'une quelconque des revendications 1 à 3, **caractérisé en ce que** le tracteur présente un récepteur (10), qui est conçu pour recevoir l'information du dispositif de transmission, et un dispositif de traitement de l'information (12), qui est conçu pour représenter sur un écran d'affichage (4) les informations concernant la tare et/ou le poids du chargement.

5. Tracteur selon la revendication 4, **caractérisé en ce que** le tracteur (1) présente un affichage de poids brut, qui est conçu pour afficher un poids brut.

6. Tracteur selon la revendication 4 ou 5, **caractérisé en ce que** le tracteur (1) présente un affichage de la tare, qui est conçu pour afficher une tare.

7. Tracteur selon l'une quelconque des revendications 4 à 6, **caractérisé en ce que** le tracteur (1) présente un affichage de poids net, qui est conçu pour afficher un poids net.

8. Tracteur selon l'une quelconque des revendications 4 à 7, **caractérisé en ce que** le tracteur (1) présente un dispositif de commande (11), qui est conçu pour déterminer la vitesse maximale autorisée en fonction des informations transmises.

9. Tracteur selon l'une quelconque des revendications 4 à 7, **caractérisé en ce que** le dispositif de commande (11) comprend un écran d'affichage (4), qui est conçu pour afficher la vitesse maximale autorisée.

10. Tracteur selon l'une quelconque des revendications 4 à 9, **caractérisé en ce que** le dispositif de commande (11) comprend un système automatique, qui est conçu pour limiter la vitesse de roulage praticable du tracteur à la vitesse maximale autorisée.

11. Tracteur selon l'une quelconque des revendications 4 à 10, **caractérisé en ce que** le dispositif de traitement de l'information (12) est conçu pour déterminer une différence de poids entre deux poids du chargement de la remorque (15) reçus par le récepteur à des instants différents et l'affichage du poids est conçu pour afficher une différence de poids entre deux poids du chargement de la remorque (15) reçus par le récepteur à des instants différents.

12. Tracteur selon l'une quelconque des revendications 4 à 11, **caractérisé en ce que** le tracteur est muni d'un dispositif d'impression (14) pour éditer les informations de poids, le tracteur étant relié au dispositif de traitement de l'information (12).

13. Dispositif d'attelage pour tracteurs présentant au moins une remorque (15) selon l'une quelconque des revendications 1 à 3 et un tracteur (1) selon l'une quelconque des revendications 4 à 12.

14. Dispositif d'attelage pour tracteurs selon la revendication 13, **caractérisé en ce que** les remorques (15) présentent une exécution de l'information concernant la tare et/ou le poids du chargement d'une autre remorque (15) au récepteur (10) du tracteur.

15. Dispositif d'attelage pour tracteurs selon la revendication 14, **caractérisé en ce qu'**une première remorque (15) présente un récepteur intermédiaire pour recevoir l'information du dispositif de transmission d'une autre remorque (15) attelée à la première remorque (15) et un dispositif de traitement de l'information pour l'addition des informations reçues concernant la tare et le poids net du chargement de l'autre remorque (15) aux informations relatives à la tare de la première remorque (15) dans l'unité de mémoire et du poids net du chargement de la première remorque (15) déterminé par le détecteur du poids de chargement (22) et dans lequel le dispositif de traitement de l'information est conçu pour retransmettre au dispositif de transmission de la première remorque l'addition de la tare et du poids net du chargement de l'autre remorque (15) aux informations relatives à la tare de la première remorque (15) et du poids net du chargement de la première remorque (15) déterminé par le détecteur du poids de chargement (22) en vue de la retransmission au tracteur (1).
